(19) 

Europäisches
Patentamt
European
Patent Office
Office européen
des brevets

(11)  **EP 4 648 125 A1**

(12)  **EUROPEAN PATENT APPLICATION**
published in accordance with Art. 153(4) EPC

(43) Date of publication:
**12.11.2025  Bulletin 2025/46**

(21) Application number: **24841901.2**

(22) Date of filing: **26.01.2024**

(51) International Patent Classification (IPC):
***H01M 4/137*** (2010.01)

(52) Cooperative Patent Classification (CPC):
Y02E 60/10

(86) International application number:
**PCT/CN2024/074243**

(87) International publication number:
**WO 2025/015894 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **17.07.2023  CN 202310875559**

(71) Applicant: **Contemporary Amperex Technology
Co., Limited
Ningde, Fujian 352100 (CN)**

(72) Inventors:
• **BIE, Changfeng
Ningde, Fujian 352100 (CN)**
• **LI, Xiaojing
Ningde, Fujian 352100 (CN)**

• **YIN, Xiang
Ningde, Fujian 352100 (CN)**
• **LENG, Xue
Ningde, Fujian 352100 (CN)**
• **FANG, Xiaoming
Ningde, Fujian 352100 (CN)**
• **LIU, Hongyu
Ningde, Fujian 352100 (CN)**
• **LI, Shuangfu
Ningde, Fujian 352100 (CN)**
• **NI, Huan
Ningde, Fujian 352100 (CN)**
• **LIU, Na
Ningde, Fujian 352100 (CN)**

(74) Representative: **Laufhütte, Dieter
Lorenz Seidler Gossel
Rechtsanwälte Patentanwälte
Partnerschaft mbB
Widenmayerstraße 23
80538 München (DE)**

(54)  **POSITIVE ELECTRODE SHEET, SECONDARY BATTERY, AND ELECTRIC DEVICE**

(57)  A positive electrode sheet, a secondary battery, and an electric device. The positive electrode sheet comprises a current collector and a positive electrode film layer located on at least one side of the current collector; the positive electrode film layer comprises a first area and a second area; the particle size distribution index of an active material in the first area is smaller than the particle size distribution index of an active material in the second area, wherein the particle size distribution index is the ratio of the standard deviation of the particle size of an active material to the average particle size thereof, the first area is an area where the positive electrode film layer extends vertically from the surface on the side close to the current collector to the positive electrode film layer within a distance h1, the second area is an area where the positive electrode film layer extends vertically from the surface on the side close to the current collector to the positive electrode film layer with a distance from h1 to H, and H is the thickness of the positive electrode film layer, and h 1 is less than H.

FIG. 1

EP 4 648 125 A1

**Description**

CROSS-REFERENCE

The present application refers to Chinese Patent Application No. 202310875559.8, entitled "POSITIVE ELECTRODE PLATE, SECONDARY BATTERY, AND ELECTRIC DEVICE" and filed on July 17, 2023, which is incorporated herein by reference in its entirety.

TECHNICAL FIELD

The present application relates to the technical field of secondary batteries, and in particular, to a positive electrode plate, a secondary battery, and an electric device.

BACKGROUND

In recent years, as secondary batteries have been widely used in energy storage power systems such as hydropower, thermal power, wind power, and solar power stations, as well as in various fields such as electric tools, electric bicycles, electric motorcycles, electric vehicles, military equipment, and aerospace, there are increasingly higher demands for the performance of the secondary batteries in the market.

Improving the energy density of secondary batteries has become a primary focus in the market. However, the increase in the energy density of secondary batteries tends to cause battery safety problems, and how to maintain the safety of the batteries while improving the energy density of the batteries has become a technical problem to be solved urgently at present.

SUMMARY

In view of the technical problems mentioned in the background section, the present application provides a positive electrode plate and aims to improve the flexibility of the electrode plate while improving the volumetric energy density of a battery, reducing the possibility of a brittle failure of the electrode plate, and at the same time improving the safety performance of the battery.

A first aspect of the present application provides a positive electrode plate, which includes a current collector and a positive electrode film layer located on at least one side of the current collector. The positive electrode film layer includes a first region and a second region, and the particle distribution index of an active material in the first region is smaller than the particle distribution index of an active material in the second region, where the particle distribution index refers to the ratio of a standard deviation of the particle size of the active material to the average particle size. The first region refers to a region of the positive electrode film layer that is within a vertical extension distance $h_1$ from the surface on a side close to the current collector to the positive electrode film layer, and the second region is a region of the positive electrode film layer that is located between vertical extension distances $h_1$ and $H$ from the surface on the side close to the current collector to the positive electrode film layer, where $H$ is the thickness of the positive electrode film layer, and $h_1$ is less than $H$. Optionally, a difference value between the particle distribution index of the active material in the second region and the particle distribution index of the active material in the first region is 0.08-0.80, optionally 0.20-0.70.

The uniform distribution of the active material in the first region enables good sliding between the active materials, significantly improving the flexibility of the positive electrode plate after cold pressing. Meanwhile, the size gradation of the active material in the second region helps to increase the compaction density of the positive electrode plate, so that the positive electrode plate maintains good flexibility while achieving high compaction density, and the safety performance of the battery is maintained while the energy density of the battery is improved.

In any embodiment, the particle distribution index of the active material in the first region is 0.05-0.52.

The particle distribution index of the active material in the first region being 0.05-0.52 indicates that the particle size of the active material in the first region is uniform, so that the positive electrode plate maintains good flexibility while having high compaction density.

In any embodiment, the particle distribution index of the active material in the second region is 0.60-0.82, optionally 0.65-0.78.

The particle distribution index of the active material in the second region being 0.60-0.82 indicates that the active material in the second region has a large particle size dispersity and exhibits a size gradation relationship, which is conducive to achieving close filling to improve the compaction density and increase the volumetric energy density of the battery.

In any embodiment, the average particle size of the active material in the first region is 150 nm to 2000 nm, optionally 300 nm to 2000 nm.

The active material in the first region features moderate particle size and a relatively small number of large single crystal particles at the micron level, and thus damage to the substrate during compression relatively rarely occurs, which enables to balance the capacity of the battery and the flexibility of the electrode plate and thereby to achieve the synchronous optimization of the volumetric energy density and the safety performance of the battery.

In any embodiment, in the second region, based on the total number of the active material, the number percentage content of the active material with a particle size of 50 nm to 200 nm is 10%-50%, optionally 10%-25%.

The presence of the active material with a small particle size helps to achieve close packing in the second region, thereby achieving an increase in compaction density and energy density. In addition, the active material with a small particle size can shorten the diffusion distance of active ions and improve the power performance and the low-temperature performance of the battery via the small particle size.

In any embodiment, in the second region, based on the total cross-sectional area of the active material, the cross-sectional area percentage content of the active material with a particle size of not smaller than 1500 nm is 5%-25%, optionally 10%-25%.

The above setting enables the active material in the second region to generate the size gradation and achieve close packing, which helps to increase the ultimate compaction density and the volumetric energy density of the battery.

In any embodiment, the specific surface area of the active material in the first region is 4 $m^2$/g to 14 $m^2$/g, optionally 6 $m^2$/g to 12 $m^2$/g.

In the first region, the number of the active material with an extremely small particle size is small and the specific surface area of the active material is relatively low, which helps to reduce the usage amount of a binder, thereby improving the loading amount of the active material and improving the volumetric energy density of the battery while improving the flexibility of the electrode plate and increasing the safety performance of the battery.

In any embodiment, the mass percentage content of the binder in the first region is lower than the mass percentage content of the binder in the second region. The mass percentage content of the binder in the first region is the ratio of the mass of the binder in the first region to the mass of the positive electrode film layer in the first region, and the mass percentage content of the binder in the second region is the ratio of the mass of the binder in the second region to the mass of the positive electrode film layer in the second region.

Most of the binders in the positive electrode active material layer are crystalline or semi-crystalline materials with a high elastic modulus. A high binder content makes it difficult for the positive electrode film layer to displace or deform under external forces. Therefore, when the electrode plate is bent, the binder tends to generate intercrystalline cracks, which causes the brittle failure of the positive electrode film layer. Reducing the mass percentage content of the binder in the first region helps to further improve the flexibility of the electrode plate.

In any embodiment, the mass percentage content of the binder in the first region is 0.5%-2.5%, optionally 1.5%-2%.

In any embodiment, the ratio of h1 to H satisfies 1:10 to 5:10, optionally 2:10 to 4:10.

When the ratio of the thickness of the first region to the thickness of the positive electrode film layer is within the above range, the energy density and the safety of the battery can be synchronously improved.

In any embodiment, the areal density of the positive electrode film layer is 350 mg/1540.25 $cm^2$ to 500 mg/1540.25 $cm^2$.

The positive electrode plate according to the present application is particularly applicable to a thick electrode plate design.

In any embodiment, the active material in the first region and/or the second region includes a polyanionic compound.

The positive electrode plate according to the present application can effectively solve the problem of low compaction density of the polyanionic compound and effectively improve the volumetric energy density of the battery while ensuring the flexibility of the electrode plate.

In any embodiment, the positive electrode film layer is prepared by one-pass coating with a double-sided, double-chamber coater.

The preparation by one-pass coating with a double-sided, double-chamber coater helps to improve the efficiency and the production capacity.

A second aspect of the present application provides a secondary battery, which includes the positive electrode plate according to the first aspect.

The secondary battery according to the present application has both excellent volumetric energy density and safety performance.

A third aspect of the present application provides an electric device, which includes the secondary battery according to the second aspect.

BRIEF DESCRIPTION OF THE DRAWINGS

FIG. 1 is a schematic view of a positive electrode plate according to one embodiment of the present application;
FIG. 2 is a scanning electron microscope image of a positive electrode film layer in Example 1 of the present application;
FIG. 3 is a particle size map obtained by Avizo 3D software particle after processing a scanning electron microscope image of the cross-section of an electrode plate according to one embodiment of the present application; (A) is a particle size map of a second region, and (B) is a particle size map of a first region.
FIG. 4 is a scanning electron microscope image of the first region in FIG. 2;
FIG. 5 is a scanning electron microscope image of the second region in FIG. 2;
FIG. 6 is a schematic view of a secondary battery according to one embodiment of the present application;
FIG. 7 is an exploded view of the secondary battery according to one embodiment of the present application as shown in FIG. 6; and
FIG. 8 is a schematic view of an electric device according to one embodiment of the present application.

Reference numerals:

1 battery pack; 2 upper case body; 3 lower case body; 4 battery module; 5 secondary battery; 51 housing; 52 electrode assembly; 53 cover plate; 6 positive electrode plate; 61 current collector; 62 positive electrode film layer; 621 first region; 622 second region.

DETAILED DESCRIPTION

Hereinafter, the embodiments of the positive electrode plate, the secondary battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Increasing the compaction density of the electrode plate is one of the effective means to increase the energy density of the battery. However, the increase in compaction density will embrittle the electrode plate, making the electrode plate prone to a brittle failure during electrode plate processing or cycling. The broken electrode plate will easily puncture the separator, causing the positive electrode plate to be in direct contact with the negative electrode plate, thereby resulting in short circuits and battery safety problems.

[Positive Electrode Plate]

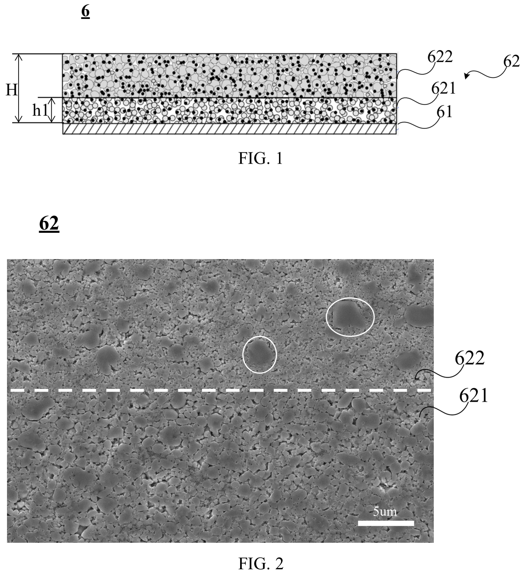

Based on this, as shown in FIG. 1, the present application provides a positive electrode plate 6, which includes a current collector 61 and a positive electrode film layer 62 located on at least one side of the current collector. The positive electrode film layer 62 includes a first region 621 and a second region 622, and the particle distribution index of an active material in the first region 621 is smaller than the particle distribution index of an active material in the second region 622, where the particle distribution index refers to the ratio of a standard deviation of the particle size of an active material to the average particle size. The first region 621 refers to a region of the positive electrode film layer 62 that is within a vertical extension distance h1 from the surface on a side close to the current collector 61 to the positive electrode film layer 62, and the second region 622 is a region of the positive electrode film layer 62 that is located between vertical extension distances h1 and H from the surface on the side close to the current collector 61 to the positive electrode film layer 62, where H is the thickness of the positive electrode film layer 62, and h1 is less than H. Optionally, a difference value between the particle distribution index of the active material in the second region and the particle distribution index of the active material in the first region is 0.08-0.80, optionally 0.20-0.70.

The structure of the positive electrode plate 6 can be characterized by any known method in the art. As an example, the electrode plate is sectioned perpendicular to a large surface thereof by using an argon ion beam to expose the cross-section. The cross-section is photographed by a scanning electron microscope, and the particle size of the active material in each layer is statistically calculated and analyzed. A scanning electron microscope image is shown in FIG. 2.

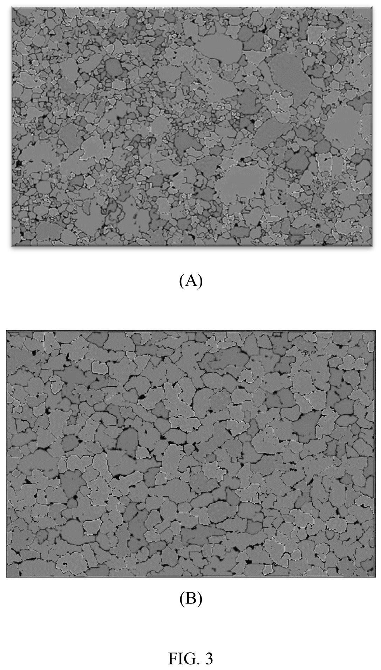

The particle size of the positive electrode active material can be characterized by any known method in the art. As an example, the particle size of the positive electrode active material is statistically calculated by an area equivalent circle diameter statistical method. As shown in FIG. 3, the scanning electron microscope image of the cross-section of the positive electrode plate is analyzed by using Avizo 3D software for particle distinguishing and statistical calculation of the area of single particles. The equivalent circle diameter is calculated according to the area of each particle statistically calculated by the software, and the particle size value of each particle is thus obtained.

The particle distribution index (PDI) has a meaning well known in the art and can be measured by test methods and test instruments known in the art. The particle distribution index (PDI) is an important parameter for measuring the uniformity of the particle size. The particle distribution indicates that the lower the particle distribution index (PDI) is, the lower the deviation value of the particle size is, and the higher the uniformity of the particle size is.

The particle distribution index (PDI) is the standard deviation of the particle size $\sigma$ divided by the average particle size $\bar{x}$,

$$PDI = \sigma/\bar{x}$$

$$\sigma = \sqrt{\frac{\sum_{i=1}^{n}(x_i - \bar{x})^2}{n}}$$

where $\sigma$ is the standard deviation of the particle size, $x_i$ is the particle size value, $\bar{x}$ is the average particle size, n is the total number of the particles statistically calculated, and the average particle size is the total particle size value divided by the total number of the particles statistically calculated.

As an example, the positive electrode current collector 61 has two surfaces opposite to each other in its own thickness direction, and the positive electrode film layer 62 is disposed on either or both of the two opposite surfaces of the positive electrode current collector 61.

In some embodiments, a metal foil or a composite current collector may be used as the positive electrode current collector 61. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the thickness of the positive electrode current collector 61 is 10 μm to 20 μm.

The positive electrode current collector 61 with a certain thickness can reduce the possibility of breakage of the positive electrode plate, thereby improving the safety performance of the battery.

As can be seen from FIG. 3 to FIG. 5, the particle distribution index of the active material in the first region 621 being smaller than the particle distribution index of the active material in the second region 622 indicates that the particle size of the active material in the first region 621 is more uniform than the particle size of the active material in the second region 622. The uniform distribution of the active material in the first region 621 enables good sliding between the active materials, significantly improving the flexibility of the positive electrode plate 6 after cold pressing. Meanwhile, the size gradation of the active material in the second region 621 helps to increase the compaction density of the positive electrode plate 6, so that the positive electrode plate 6 maintains good flexibility while achieving high compaction density, and the safety performance of the battery is maintained while the energy density of the battery is improved.

In some embodiments, the difference value between the particle distribution index of the active material in the second region and the particle distribution index of the active material in the first region is 0.08, 0.10, 0.20, 0.30, 0.40, 0.50, 0.60, 0.70, 0.80, or any value therebetween.

Controlling the difference value of the particle distribution index to be within the above interval can effectively increase the ultimate compaction density of the electrode plate, improve the flexibility of the electrode plate, and optimize the energy density of the battery.

In some embodiments, the particle distribution index of the active material in the first region is 0.05-0.52.

In some embodiments, the particle distribution index of the active material in the first region is optionally 0.52, 0.5, 0.45, 0.4, 0.35, 0.3, 0.25, 0.2, 0.1, 0.05, or any value therebetween.

The particle distribution index of the active material in the first region being 0.05-0.52 indicates that the particle size of the active material in the first region is uniform, so that the positive electrode plate maintains good flexibility while having high compaction density.

In some embodiments, the particle distribution index of the active material in the second region is 0.60-0.82, optionally 0.65-0.78.

In some embodiments, the particle distribution index of the active material in the second region is optionally 0.60, 0.62, 0.64, 0.65, 0.68, 0.70, 0.73, 0.76, 0.78, 0.82, or any value therebetween.

The particle distribution index of the active material in the second region being 0.60-0.82 indicates that the active material in the second region has a large particle size dispersity and exhibits a size gradation relationship, which is conducive to achieving close filling to improve the compaction density and increase the volumetric energy density of the battery.

In some embodiments, the average particle size of the active material in the first region is 150 nm to 2000 nm, optionally 300 nm to 2000 nm.

In some embodiments, the average particle size of the active material in the first region is optionally 150 nm, 200 nm, 300 nm, 400 nm, 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, 2000 nm, or any value therebetween.

The active material in the first region features moderate particle size and a relatively small number of large single crystal particles at the micron level, and thus damage to the substrate during compression relatively rarely occurs, which enables to balance the capacity of the battery and the flexibility of the electrode plate and thereby to achieve the synchronous optimization of the volumetric energy density and the safety performance of the battery.

In some embodiments, in the second region, based on the total number of the active material, the number percentage content of the active material with a particle size of 50 nm to 200 nm is 10%-50%, optionally 10%-25%.

In some embodiments, in the second region, based on the total number of the active material, the number percentage content of the active material with a particle size of 50 nm to 200 nm is optionally 10%, 16%, 20%, 25%, 30%, 40%, 50%, or any value therebetween.

The number content of the active material with a particle size of 50 nm to 200 nm can be tested by any known method in the art. As an example, it is calculated and obtained by dividing the number of the active material with a particle size of 50 nm to 200 nm in the scanning electron microscope image of the cross-section by the total number of the active material statistically calculated.

The presence of the active material with a small particle size helps to achieve close packing in the second region, thereby achieving an increase in compaction density and energy density. In addition, the active material with a small particle size can shorten the diffusion distance of active ions and improve the power performance and the low-temperature performance of the battery via the small particle size.

In some embodiments, in the second region, based on the total cross-sectional area of the active material, the cross-sectional area percentage content of the active material with a particle size of not smaller than 1500 nm is 5%-25%, optionally 10%-25%.

In some embodiments, in the second region, based on the total cross-sectional area of the active material, the cross-sectional area percentage content of the active material with a particle size of not smaller than 1500 nm is optionally 5%, 10%, 15%, 19%, 20%, 25%, or any value therebetween.

The cross-sectional area percentage content of the active material with a particle size of not smaller than 1500 nm can be tested by any known method in the art. As an example, it is calculated and obtained by dividing the cross-sectional area of the active material with a particle size of not smaller than 1500 nm in the scanning electron microscope image of the cross-section by the total area of the active material statistically calculated. The cross-sectional area of the active material can be obtained by statistically calculating and analyzing the scanning electron microscope image of the cross-section of the electrode plate using Avizo 3D software.

The above setting enables the active material in the second region to generate the size gradation and achieve close packing, which helps to increase the ultimate compaction density and the volumetric energy density of the battery.

In some embodiments, the specific surface area of the active material in the first region is $4 m^2/g$ to $14 m^2/g$, optionally $6 m^2/g$ to $12 m^2/g$.

In some embodiments, the specific surface area of the active material in the first region is optionally $4 m^2/g$, $6 m^2/g$, $8 m^2/g$, $10 m^2/g$, $12 m^2/g$, $14 m^2/g$, or any value therebetween.

In the first region, the number of the active material with an extremely small particle size is small and the specific surface area of the active material is relatively low, which helps to reduce the usage amount of a binder, thereby improving the loading amount of the active material and improving the volumetric energy density of the battery while improving the flexibility of the electrode plate and increasing the safety performance of the battery.

In some embodiments, the mass percentage content of the binder in the first region is lower than the mass percentage content of the binder in the second region. The mass percentage content of the binder in the first region is the ratio of the mass of the binder in the first region to the mass of the positive electrode film layer in the first region, and the mass percentage content of the binder in the second region is the ratio of the mass of the binder in the second region to the mass of the positive electrode film layer in the second region.

In some embodiments, the binder includes fluoropolymer, and the fluoropolymer includes at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

Most of the binders in the positive electrode film layer are crystalline or semi-crystalline materials with a high elastic modulus, making them difficult to deform under external forces. Therefore, when the positive electrode plate with high binder content is bent, the positive electrode film layer is difficult to displace or deform under external forces, and the binder tends to generate intercrystalline cracks, which causes the brittle failure of the active material layer. Reducing the mass percentage content of the binder in the first region helps to further improve the flexibility of the electrode plate.

In some embodiments, the mass percentage content of the binder in the first region is 0.5%-2.5%, optionally 1.5%-2%.

In some embodiments, the mass percentage content of the binder in the first region is optionally 0.5%, 1%, 1.5%, 2%, 2.5%, or any value therebetween.

In some embodiments, the ratio of h1 to H satisfies 1:10 to 5:10, optionally 2:10 to 4:10.

In some embodiments, the ratio of h1 to H is optionally 1:10, 2:10, 3:10, 4:10, 5:10, or any value therebetween.

When the ratio of the thickness h1 of the first region to the thickness H of the positive electrode film layer is within the above range, the energy density and the safety of the battery can be synchronously improved.

In some embodiments, the areal density of the positive electrode film layer is $350 mg/1540.25 cm^2$ to $500 mg/1540.25 cm^2$.

The positive electrode plate according to the present application is particularly applicable to a thick electrode plate design. Through a double-layer design of the electrode plate, the problems of unstable cavity pressure, large weight fluctuation, and poor uniformity of the electrode plate during the coating of a single-layer electrode plate are alleviated, and the quality of the electrode plate is effectively improved.

In addition, thick electrode plates are more prone to cracking compared with common electrode plates. The cracking means that when the battery cell is shaped by hot pressing after being wound and molded, the inner film layer is compressed, and the positive electrode active material on the inner film layer is compressed and deformed in a constraint space to generate a compressive force on the current collector and the outer film layer. As a result, the current collector or the outer film layer is broken due to insufficient tension stress, causing cracks or pinholes and resulting in light transmission of the electrode plate. Due to the great compressive force of the inner film layer of thick electrode plates, the cracking is more common in the thick electrode plates. The uniform distribution of the active material in the first region can effectively disperse the compressive force generated by the inner film layer, thereby reducing the occurrence of cracks.

In some embodiments, the active material in the first region and/or the second region includes a polyanionic compound.

The general formula of the polyanionic compound is as follows:

$$Ne_xM_y(A_zO_k)_mZ_w,$$

where Ne includes at least one of Na and Li, M includes at least one of Fe, Mn, Ni, Co, Ti, V, Cr, V, Ca, Mg, and Al, A includes at least one of Si, S, and P, and Z includes at least one of F and OH, where $0.98 \leq x \leq 10$, $0.94 \leq y \leq 10$, $0.94 \leq z \leq 10$, $2 \leq k \leq 10$, $0.5 \leq m \leq 10$, and $0 < w \leq 10$.

In some embodiments, the polyanionic compound is an alkali metal-containing double salt with a crystal framework constructed by a series of tetrahedral and polyhedral anion units, and is mainly classified into olivine structure, NASICON structure, triclinic structure, and mixed polyanionic compound materials.

In some embodiments, the polyanionic compound includes lithium iron phosphate, sodium iron phosphate, and sodium vanadium phosphate.

The polyanionic compound features a stable structure, good safety performance, high thermal stability, abundant availability of raw materials for processing, and a low price. In addition, the volume change and the structural rearrangement of the material are extremely little during the charging and discharging process, so that the material has a relatively high operating voltage and excellent stability. However, the bulk electronic conductivity of the polyanionic compound is relatively low, and carbon coating and particle nanonization are generally required to improve the conductivity and the ionic conductivity. However, the polyanionic compound which is carbon coated and nanonized is difficult to process and closely compact, which makes it difficult to effectively improve the compaction density of the electrode plate and the volumetric energy density of the battery.

The positive electrode plate according to the present application can effectively solve the problem of low compaction density of the polyanionic compound and effectively improve the volumetric energy density of the battery while ensuring the flexibility of the electrode plate.

In some embodiments, the positive electrode film layer is prepared by one-pass coating with a double-sided, double-chamber coater.

The preparation by one-pass coating with a double-sided, double-chamber coater helps to improve the efficiency and the production capacity.

In some embodiments, the positive electrode film layer is prepared by multi-pass coating.

[Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on either or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

[Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

[Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

A second aspect of the present application provides a secondary battery, which includes the negative electrode plate according to any embodiment and/or a negative electrode plate prepared by the preparation method according to any embodiment.

In some embodiments, the secondary battery includes an electrolyte, and the silicon interface layer is located between the electrolyte and the metal layer.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

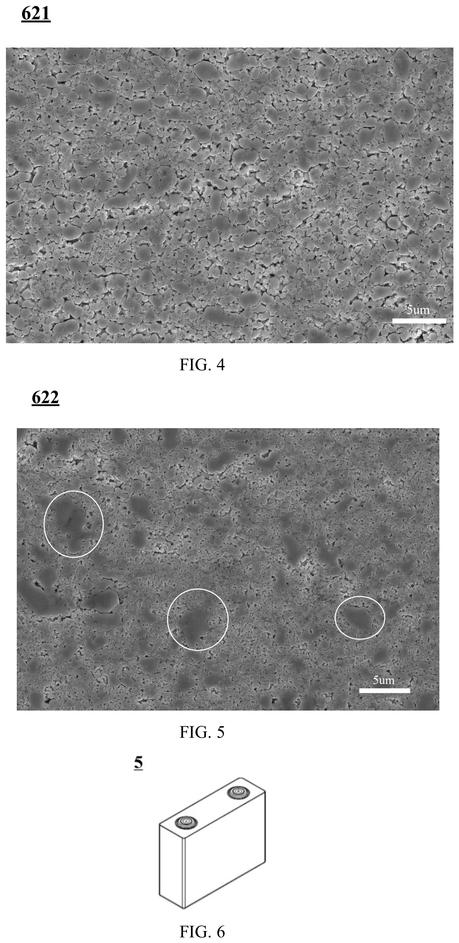

The present application does not particularly limit the shape of the secondary battery, and it may have a cylindrical shape, a prismatic shape, or any other shape. For example, FIG. 6 shows a secondary battery 5 having a prismatic structure as one example.

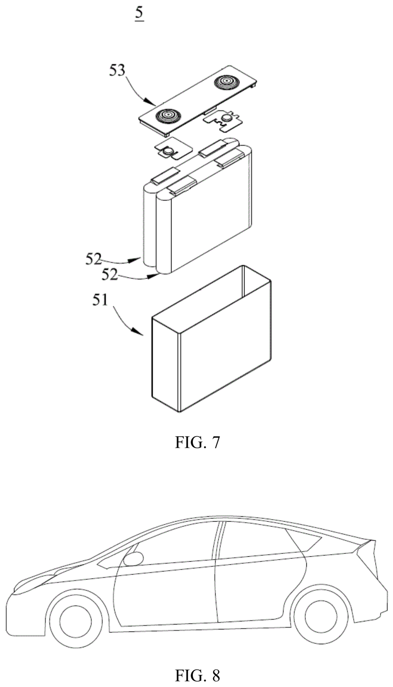

In some embodiments, referring to FIG. 7, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assemblies 52 included in the secondary battery 5 may be one or more, and those skilled in the art can select the number according to specific and actual needs.

In addition, the present application further provides an electric device. The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

FIG. 8 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a secondary battery may thus be used as a power source.

## Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

## I. Preparation Method

Example 1

1) Preparation of first positive electrode slurry

96.5 wt% of a first positive electrode active material lithium iron phosphate (Dv50 being 800 nm, Dv10 being 150 nm, and Dv90 being 1800 nm), 1.0 wt% of a conductive agent (conductive carbon black), 2.0 wt% of a binder (polyvinylidene fluoride), and 0.5 wt% of a dispersant polyvinylpyrrolidone were mixed, and then N-methylpyrrolidone was added. The mixture was stirred and dispersed to adjust the viscosity of the slurry to 8000 mPa·s to 12,000 mPa·s, and the first positive electrode slurry was prepared. Dv50 is the particle size at which the cumulative volume distribution of the sample reaches 50%; Dv10 is the particle size at which the cumulative volume particle size distribution of the sample reaches 10%; Dv90 is the particle size at which the cumulative volume particle size distribution of the sample reaches 50%.

2) Preparation of second positive electrode slurry

96.5 wt% of a second positive electrode active material lithium iron phosphate (Dv50 being 1200 nm, Dv10 being 200 nm, and Dv90 being 3500 nm), 1.0 wt% of a conductive agent (conductive carbon black), 2.0 wt% of a binder (polyvinylidene fluoride), and 0.5 wt% of a dispersant polyvinylpyrrolidone were mixed, and then N-methylpyrrolidone was added. The mixture was stirred and dispersed to adjust the viscosity of the slurry to 8000 mPa·s to 12,000 mPa·s, and the second positive electrode slurry was prepared.

3) Preparation of positive electrode plate

The first positive electrode slurry and the second positive electrode slurry were applied, through one-pass coating, on an aluminum foil with a coating weight of 100 mg/1540.25 $cm^2$ and a coating weight of 300 mg/1540.25 $cm^2$ (referring to the weight of the dry material in the slurry), respectively, using a double-sided, double-chamber coating device, where the first positive electrode slurry was applied as a lower layer proximal to the aluminum foil, which was a first active material layer and was located at the first region of the electrode plate, and the second positive electrode slurry was applied as an upper layer, which was a second active material layer and was located at the second region of the electrode plate. After the double-sided coating was completed, drying, cold pressing, and slitting were performed to obtain the positive electrode plate, and the thickness of the aluminum foil was 15 μm.

4) Preparation of negative electrode plate

95 wt% of a negative electrode active material (artificial graphite), 1.0 wt% of a conductive agent (conductive carbon black), 2.0 wt% of a binder (styrene-butadiene rubber (SBR)), and 2.0 wt% of a thickener (sodium carboxymethylcellulose (CMC)) were mixed, and deionized water was added. The mixture was stirred and dispersed to prepare a negative electrode slurry.

Then, a Cu foil was coated with the negative electrode slurry. After both sides were coated, drying, cold pressing, slitting, and tab forming were performed to obtain the negative electrode plate.

5) Preparation of battery

The positive electrode plate, the separator, and the negative electrode plate were stacked in sequence to enable the separator to be located between the positive electrode and the negative electrode for isolation, and the stack was then wound to obtain a bare cell. The bare cell was disposed in an outer packaging, and the prepared electrolytic solution was injected, followed by packaging, injection of electrolytic solution, formation, degassing, and other processes, and a lithium-ion battery was obtained.

The preparation methods in Examples 2-21 were similar to those in Example 1, except that the particle size of the materials of the layers, the binder content, or the coating mass was changed to adjust relevant parameters. The specific parameters are shown in Table 1.

The preparation methods in Example 14 were substantially the same as those in Example 1, except that the mass content of the positive electrode active material was 97 wt%, the mass content of the binder was 1.5%, and the proportion of the positive electrode active material with a small particle size was reduced to reduce the specific surface area of the positive electrode active material.

The preparation methods in Example 15 were substantially the same as those in Example 1, except that the mass content of the positive electrode active material was 96.7 wt%, the mass content of the binder was 1.8%, and the proportion of the positive electrode active material with a small particle size was reduced to reduce the specific surface area of the positive electrode active material.

The preparation methods in Comparative Example 1 were substantially the same as those in Example 1, except that the components of the first active material layer and the second active material layer in Comparative Example 1 were both the same as the components of the first active material layer.

The preparation methods in Comparative Example 2 were substantially the same as those in Example 1, except that the components of the first active material layer and the second active material layer in Comparative Example 2 were both the same as the components of the second active material layer.

The preparation methods in Comparative Example 3 were substantially the same as those in Example 1, except that the components of the first active material layer and the second active material layer in Comparative Example 3 were respectively the same as the components of the second active material layer and the first active material layer in Example 1.

**II.** Test **Methods**

1) Method for testing average particle size and particle size distribution

The electrode plate was sectioned perpendicular to a large surface thereof by using an argon ion beam to expose the cross-section. The cross-section was photographed by a scanning electron microscope, and the particle size of the active material was statistically calculated and analyzed using the long diameter statistical method, as shown in FIG. 3.

The average particle size is the total particle size value divided by the total number of the particles;

the particle distribution index (PDI) is the standard deviation of the particle size $\sigma$ divided by the average particle size $\bar{x}$,

$$PDI = \sigma/\bar{x}$$

$$\sigma = \sqrt{\frac{\sum_{i=1}^{n}(x_i - \bar{x})^2}{n}}$$

where $\sigma$ is the standard deviation of the particle size, $x_i$ is the particle size value, $\bar{x}$ is the average particle size, and n is the total number of the particles statistically calculated.

Since the particles with a particle size of $0 < r \leq 50$ nm were prone to adhesion, there were relatively large errors in statistical calculation, and it was difficult to identify the particles separately, the particles with a particle size of $0 < r \leq 50$ nm were not within the statistical scope during the statistical calculation of the particle size.

The number content of the active material with a particle size of 50 nm to 200 nm was calculated and obtained by dividing the number of the active material with a particle size of 50 nm to 200 nm in the cross-section by the total number of the active material.

The cross-sectional area percentage content of the active material with a particle size of not smaller than 1500 nm was calculated and obtained by dividing the cross-sectional area of the active material with a particle size of not smaller than 1500 nm in the end surface by the cross-sectional area of the total active material.

The cross-sectional area of the active material was obtained by statistically calculating and analyzing the obtained scanning electron microscope image of the cross-section of the electrode plate using Avizo 3D software.

2) Method for testing specific surface area

The specific surface area was determined by the gas adsorption method according to the GB/T19587-2017 test standard, specifically as follows: A positive electrode active material was taken as a sample, and a sample tube was immersed in liquid nitrogen at -196 °C. The adsorption amount of nitrogen on the solid surface under different pressures was determined under a relative pressure of 0.05-0.30. The monolayer adsorption amount of the sample was obtained based on the BET multilayer adsorption theory and its formula, and thus the specific surface area of the material was calculated.

3) Method for testing ultimate compaction density

The double-sided coated electrode plate was cold-pressed using a roller presser. The elongation of the cold-pressed electrode plate was measured, and its flexibility was evaluated.

By increasing the pressure of the roller presser, the electrode plates with different compaction densities were obtained. As the pressure increased, the compaction density of the electrode plate increased, the elongation of the electrode plate increased, and the flexibility of the electrode plate decreased. An excessively high elongation of the electrode plate tended to cause warpage of the electrode plate, and an excessively low flexibility of the electrode plate tended to cause brittle failure of the electrode plate. Therefore, the ultimate compaction density was defined as the smaller one of the compaction densities respectively corresponding to the situations when the elongation of the electrode plate was 6‰ and when the number of electrode plate flexibility folds was 3.

The compaction density was calculated by dividing the mass of a positive electrode film layer on one side by the volume of the positive electrode film layer.

The test method for the elongation was as follows:
The electrode plate was laid flat on a horizontal table and cut into segments, with each electrode plate strip about 100 cm long. The copper foil substrate at the edge of the electrode plate was removed while keeping the cutting edge of the electrode plate parallel to the MD direction of the electrode plate (perpendicular to the direction of the cold pressing roller) and ensuring that the electrode plate was completely covered by the coating layer. The length between the mark points at the respective same width positions in the length direction at the head and tail of the electrode plate was measured using a steel rule and the length was measured with 0.1 mm resolution, and the length before cold pressing was recorded. After cold pressing by the cold pressing machine, the length between the corresponding mark points after cold pressing was recorded. The elongation of the electrode plate was: (the length after cold pressing - the length before cold pressing)/the length before cold pressing.

The test method for the number of flexibility folds was as follows.

4) Number of folds of electrode plate with a compaction density of 2.5 g/cm$^3$

The positive electrode plate with a compaction density of 2.5 g/cm$^3$ was cut into a test sample with a size of $20 \times 100$ mm$^2$. The test sample was folded in a forward direction, pressed flat with a 2 kg compression roller, and then unfolded to check against light whether light transmission through the gap was observed. If no light transmission was observed, the test sample was folded in a backward direction, pressed flat with a 2 kg compression roller, and then checked against light again. This operation was repeated until light transmission through gap was observed, and the number of folds was recorded. The test was repeated three times, and the average value was taken as the reference data for the flexibility of the electrode plate.

5) Test method for volumetric energy density of battery

The battery with the ultimate compaction density was left to stand at 25 °C for 2 h, and the temperature of the battery was ensured to be 25 °C. At 25 °C, the battery was charged at 0.33C to a charge cut-off voltage, and constant-voltage charging was continued at the charge cut-off voltage until the current reached 0.05C, at which point charging was terminated (where C0 represents the rated capacity of the battery). After being left to stand at 25 °C for 1 h, the battery was discharged at 0.33C to a discharge cut-off voltage at 25 °C, and the total discharge energy of the battery was recorded as E0;

the volume of the battery was measured as V0;
the volumetric energy density of the battery = the discharge energy E0 of the battery/the volume M0 of the battery.

### III. Analysis of Test Results of Examples and Comparative Examples

The batteries of the examples and comparative examples were prepared according to the methods described above, and various performance parameters were measured. The results are shown in Table 1-Table 4 below.

Table 1

| No. | First region | | | | Second region | | | | h1:H | $PDI_2-PDI_1$ |
|---|---|---|---|---|---|---|---|---|---|---|
| | $PDI_1$ | Average particle size nm | Specific surface area $m^2/g$ | Binder content | Number content of active material with particle size of 50 nm to 200 nm | Cross-sectional area percentage content of active material with particle size of not smaller than 1500 nm | $PDI_2$ | Binder content | | |
| Example 1 | 0.35 | 1100 | 10 | 2% | 16% | 19% | 0.73 | 2% | 3/10 | 0.38 |
| Example 2 | 0.5 | 1100 | 10 | 2% | 16% | 19% | 0.73 | 2% | 3/10 | 0.23 |
| Example 3 | 0.52 | 1100 | 10 | 2% | 16% | 19% | 0.73 | 2% | 3/10 | 0.21 |
| Example 4 | 0.35 | 150 | 14 | 2% | 16% | 19% | 0.73 | 2% | 3/10 | 0.38 |
| Example 5 | 0.35 | 300 | 12 | 2% | 16% | 19% | 0.73 | 2% | 3/10 | 0.38 |
| Example 6 | 0.35 | 700 | 11 | 2% | 16% | 19% | 0.73 | 2% | 3/10 | 0.38 |
| Example 7 | 0.35 | 2000 | 6 | 2% | 16% | 19% | 0.73 | 2% | 3/10 | 0.38 |
| Example 8 | 0.35 | 1100 | 10 | 2% | 10% | 19% | 0.6 | 2% | 3/10 | 0.25 |
| Example 9 | 0.35 | 1100 | 10 | 2% | 25% | 19% | 0.78 | 2% | 3/10 | 0.43 |
| Example 10 | 0.35 | 1100 | 10 | 2% | 50% | 19% | 0.82 | 2% | 3/10 | 0.47 |
| Example 11 | 0.35 | 1100 | 10 | 2% | 16% | 5% | 0.6 | 2% | 3/10 | 0.25 |
| Example 12 | 0.35 | 1100 | 10 | 2% | 16% | 10% | 0.65 | 2% | 3/10 | 0.30 |
| Example 13 | 0.35 | 1100 | 10 | 2% | 16% | 25% | 0.76 | 2% | 3/10 | 0.41 |
| Example 14 | 0.35 | 1100 | 6 | 1.50% | 16% | 19% | 0.73 | 2% | 3/10 | 0.38 |
| Example 15 | 0.35 | 1100 | 8 | 1.80% | 16% | 19% | 0.73 | 2% | 3/10 | 0.38 |

(continued)

| No. | First region | | | | Second region | | | | h1:H | PDI$_2$-PDI$_1$ |
|---|---|---|---|---|---|---|---|---|---|---|
| | PDI$_1$ | Average particle size nm | Specific surface area m$^2$/g | Binder content | Number content of active material with particle size of 50 nm to 200 nm | Cross-sectional area percentage content of active material with particle size of not smaller than 1500 nm | PDI$_2$ | Binder content | | |
| Example 16 | 0.35 | 1100 | 10 | 2% | 16% | 19% | 0.73 | 2% | 1/10 | 0.38 |
| Example 17 | 0.35 | 1100 | 10 | 2% | 16% | 19% | 0.73 | 2% | 2/10 | 0.38 |
| Example 18 | 0.35 | 1100 | 10 | 2% | 16% | 19% | 0.73 | 2% | 4/10 | 0.38 |
| Example 19 | 0.35 | 1100 | 10 | 2% | 16% | 19% | 0.73 | 2% | 5/10 | 0.38 |
| Example 20 | 0.05 | 1100 | 10 | 2% | 16% | 19% | 0.73 | 2% | 3/10 | 0.68 |
| Example 21 | 0.10 | 1100 | 10 | 2% | 16% | 19% | 0.73 | 2% | 3/10 | 0.63 |
| Comparative Example 1 | All prepared with the first positive electrode slurry | | | | | | | | | / |
| Comparative Example 2 | All prepared with the second positive electrode slurry | | | | | | | | | / |
| Comparative Example 3 | The components of the second active material layer of Example 1 are located in the first region, and the components of the first active material layer of Example 1 are located in the second region | | | | | | | | 3/10 | -0.38 |

Table 2

| No. | Ultimate compaction density g/cm$^3$ | Number of folds of electrode plate with compaction of 2.5 g/cm3 | Volumetric energy density (Wh/L) of the battery cell |
|---|---|---|---|
| Example 1 | 2.8 | 6 | 470 |
| Example 2 | 2.65 | 5 | 440 |
| Example 3 | 2.55 | 4 | 430 |
| Example 4 | 2.6 | 3 | 435 |
| Example 5 | 2.65 | 4 | 445 |
| Example 6 | 2.7 | 5 | 455 |
| Example 7 | 2.65 | 5 | 450 |
| Example 8 | 2.6 | 6 | 430 |
| Example 9 | 2.75 | 5 | 460 |

(continued)

| No. | Ultimate compaction density g/cm$^3$ | Number of folds of electrode plate with compaction of 2.5 g/cm3 | Volumetric energy density (Wh/L) of the battery cell |
|---|---|---|---|
| Example 10 | 2.55 | 4 | 425 |
| Example 11 | 2.55 | 4 | 445 |
| Example 12 | 2.7 | 5 | 460 |
| Example 13 | 2.85 | 6 | 465 |
| Example 14 | 2.85 | 7 | 479 |
| Example 15 | 2.82 | 7 | 476 |
| Example 16 | 2.55 | 4 | 450 |
| Example 17 | 2.65 | 5 | 460 |
| Example 18 | 2.65 | 6 | 460 |
| Example 19 | 2.5 | 6 | 450 |
| Example 20 | 2.85 | 6 | 475 |
| Example 21 | 2.84 | 6 | 474 |
| Comparative Example 3 | 2.4 | 2 | 420 |

The positive electrode plates of Examples 1-21 all include a current collector and a positive electrode film layer located on at least one side of the current collector. The positive electrode film layer includes a first region and a second region, and the particle distribution index of an active material in the first region is smaller than the particle distribution index of an active material in the second region, where the particle distribution index refers to the ratio of a standard deviation of the particle size of an active material to the average particle size. The first region refers to a region of the positive electrode film layer that is within a vertical extension distance h1 from the surface on a side close to the current collector to the positive electrode film layer, and the second region is a region of the positive electrode film layer that is located between vertical extension distances h1 and H from the surface on the side close to the current collector to the positive electrode film layer, where H is the thickness of the positive electrode film layer, and h1 is less than H. As can be seen from FIG. 2-FIG. 5, the positive electrode film layer includes the first region and the second region. The particle size of the active material in the first region is more uniform, while the deviation of the particle size of the active material in the second region is large.

As can be seen from the comparison of Examples 1-21 with Comparative Example 3, when the particle distribution index of the active material in the first region is smaller than the particle distribution index of the active material in the second region by 0.20-0.70, the flexibility of the electrode plate can be improved, the achievable ultimate compaction density of the electrode plate can be improved, and the volumetric energy density of the battery can be improved.

Table 3

| No. | Ultimate compaction density g/cm$^3$ | Number of folds of electrode plate with compaction of 2.5 g/cm3 |
|---|---|---|
| Example 1 | 2.8 | 6 |
| Example 2 | 2.65 | 5 |
| Example 3 | 2.55 | 4 |
| Example 4 | 2.6 | 3 |
| Example 5 | 2.65 | 4 |
| Example 6 | 2.7 | 5 |
| Example 7 | 2.65 | 5 |
| Example 8 | 2.6 | 6 |
| Example 9 | 2.75 | 5 |

(continued)

| No. | Ultimate compaction density g/cm$^3$ | Number of folds of electrode plate with compaction of 2.5 g/cm3 |
|---|---|---|
| Example 10 | 2.55 | 4 |
| Example 11 | 2.55 | 4 |
| Example 12 | 2.7 | 5 |
| Example 13 | 2.85 | 6 |
| Example 14 | 2.85 | 7 |
| Example 15 | 2.82 | 7 |
| Example 16 | 2.55 | 4 |
| Example 17 | 2.65 | 5 |
| Example 18 | 2.65 | 6 |
| Example 19 | 2.5 | 6 |
| Example 20 | 2.85 | 6 |
| Example 21 | 2.84 | 6 |
| Comparative Example 2 | 2.45 | 2 |
| Comparative Example 3 | 2.4 | 2 |

As can be seen from the comparison of Examples 1-21 with Comparative Example 2, the positive electrode plate with the features described above can improve the flexibility of electrode plates and increase the achievable ultimate compaction density of electrode plates, compared with the positive electrode plate with the single component.

As can be seen from the comparison of Examples 1-3 and 20-21 with Comparative Examples 2 and 3, when the particle distribution index of the active material in the first region is 0.05-0.52, the flexibility and the ultimate compaction density of the electrode plate significantly increase.

Table 4

| No. | Ultimate compaction density g/cm$^3$ | Volumetric energy density (Wh/L) of the battery cell |
|---|---|---|
| Example 1 | 2.8 | 470 |
| Example 2 | 2.65 | 440 |
| Example 3 | 2.55 | 430 |
| Example 4 | 2.6 | 435 |
| Example 5 | 2.65 | 445 |
| Example 6 | 2.7 | 455 |
| Example 7 | 2.65 | 450 |
| Example 8 | 2.6 | 430 |
| Example 9 | 2.75 | 460 |
| Example 10 | 2.55 | 425 |
| Example 11 | 2.55 | 445 |
| Example 12 | 2.7 | 460 |
| Example 13 | 2.85 | 465 |
| Example 14 | 2.85 | 479 |
| Example 15 | 2.82 | 476 |
| Example 16 | 2.55 | 450 |
| Example 17 | 2.65 | 460 |

(continued)

| No. | Ultimate compaction density g/cm$^3$ | Volumetric energy density (Wh/L) of the battery cell |
| --- | --- | --- |
| Example 18 | 2.65 | 460 |
| Example 19 | 2.5 | 450 |
| Example 20 | 2.85 | 475 |
| Example 21 | 2.84 | 474 |
| Comparative Example 1 | 2.35 | 410 |
| Comparative Example 3 | 2.4 | 420 |

As can be seen from the comparison of Examples 1-21 with Comparative Example 1, the positive electrode plate with the features described above can increase the achievable ultimate compaction density of electrode plates and improve the volumetric energy density of the battery cell, compared with the positive electrode plate with the single component.

As can be seen from the comparison of Examples 1-3 and 20-21 with Comparative Examples 1 and 3, when the particle distribution index of the active material in the first region is 0.05-0.52, the ultimate compaction density of the electrode plate and the volumetric energy density of the battery significantly increase.

As can be seen from Examples 1 and 4-7, when the average particle size of the active material in the first region is 150 nm to 2000 nm, the battery has excellent flexibility, high ultimate compaction density, and high volumetric energy density.

As can be seen from the comparison of Examples 5-7 with Example 4, when the average particle size of the active material in the first region is 300 nm to 2000 nm, the flexibility, the ultimate compaction density, and the volumetric energy density of the battery are synchronously improved.

As can be seen from Examples 8-10, in the second region, based on the total number of the active material, when the number percentage content of the active material with a particle size of 50 nm to 200 nm is 10%-50%, the battery has excellent flexibility, high ultimate compaction density, and high volumetric energy density. In the second region, based on the total number of the active material, when the number percentage content of the active material with a particle size of 50 nm to 200 nm is 10%-25%, the flexibility, the ultimate compaction density, and the volumetric energy density of the battery are more significantly improved.

As can be seen from Examples 1 and 11-13, in the second region, based on the total cross-sectional area of the active material, when the cross-sectional area percentage content of the active material with a particle size of not smaller than 1500 nm is 5%-25%, the battery has excellent flexibility, high ultimate compaction density, and high volumetric energy density. In the second region, based on the total cross-sectional area of the active material, when the cross-sectional area percentage content of the active material with a particle size of not smaller than 1500 nm is 10%-25%, the flexibility, the ultimate compaction density, and the volumetric energy density of the battery are more significantly improved.

As can be seen from Examples 1 and 14-15, the specific surface area of the active material in the first region is low, so that the usage amount of the binder in the first region can be reduced compared with the usage amount of the binder in the second region, thereby improving the flexibility and the ultimate compaction density of the electrode plate, and increasing the volumetric energy density of the battery.

As can be seen from Examples 1 and 16-19, when the ratio of the thickness of the first region to the thickness of the positive electrode film layer is 1:10 to 5:10, the battery has excellent flexibility, high ultimate compaction density, and high volumetric energy density. When the ratio of the thickness h1 of the first region to the thickness H of the positive electrode film layer is 2:10 to 4:10, the flexibility, the ultimate compaction density, and the volumetric energy density of the battery are more significantly improved.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1. A positive electrode plate, comprising a current collector and a positive electrode film layer located on at least one side of the current collector, wherein the positive electrode film layer comprises a first region and a second region, and a particle distribution index of an active material in the first region is smaller than a particle distribution index of an active material in the second region, wherein the particle distribution index refers to a ratio of a standard deviation of a particle size of the active material to an average particle size, the first region refers to a region of the positive electrode film layer that is within a vertical extension distance h1 from a surface on a side close to the current collector to the positive electrode film layer, and the second region is a region of the positive electrode film layer that is located between vertical extension distances h1 and H from the surface on the side close to the current collector to the positive electrode film layer, wherein H is a thickness of the positive electrode film layer, and h1 is less than H; optionally, a difference value between the particle distribution index of the active material in the second region and the particle distribution index of the active material in the first region is 0.08-0.80, optionally 0.20-0.70.

2. The positive electrode plate according to claim 1, wherein the particle distribution index of the active material in the first region is 0.05-0.52.

3. The positive electrode plate according to claim 1 or 2, wherein the particle distribution index of the active material in the second region is 0.60-0.82, optionally 0.65-0.78.

4. The positive electrode plate according to any one of claims 1 to 3, wherein the average particle size of the active material in the first region is 150 nm to 2000 nm, optionally 300 nm to 2000 nm.

5. The positive electrode plate according to any one of claims 1 to 4, wherein in the second region, based on a total number of the active material, a number percentage content of the active material with a particle size of 50 nm to 200 nm is 10%-50%, optionally 10%-25%.

6. The positive electrode plate according to any one of claims 1 to 5, wherein in the second region, based on a total cross-sectional area of the active material, a cross-sectional area percentage content of the active material with a particle size of not smaller than 1500 nm is 5%-25%, optionally 10%-25%.

7. The positive electrode plate according to any one of claims 1 to 6, wherein a specific surface area of the active material in the first region is 4 $m^2/g$ to 14 $m^2/g$, optionally 6 $m^2/g$ to 12 $m^2/g$.

8. The positive electrode plate according to any one of claims 1 to 7, wherein a mass percentage content of a binder in the first region is lower than a mass percentage content of a binder in the second region, the mass percentage content of the binder in the first region is a ratio of a mass of the binder in the first region to a mass of the positive electrode film layer in the first region, and the mass percentage content of the binder in the second region is a ratio of a mass of the binder in the second region to a mass of the positive electrode film layer in the second region.

9. The positive electrode plate according to any one of claims 1 to 8, wherein the mass percentage content of the binder in the first region is 0.5%-2.5%, optionally 1.5%-2%.

10. The positive electrode plate according to any one of claims 1 to 9, wherein a ratio of h1 to H satisfies 1:10 to 5:10, optionally 2:10 to 4:10.

11. The positive electrode plate according to any one of claims 1 to 10, wherein an areal density of the positive electrode film layer is 350 mg/1540.25 $cm^2$ to 500 mg/1540.25 $cm^2$.

12. The positive electrode plate according to any one of claims 1 to 11, wherein the active material in the first region and/or the second region comprises a polyanionic compound.

13. The positive electrode plate according to any one of claims 1 to 12, wherein the positive electrode film layer is prepared by one-pass coating with a double-sided, double-chamber coater.

14. A secondary battery, comprising the positive electrode plate according to any one of claims 1 to 13.

15. An electric device, comprising the secondary battery according to claim 14.

**6**

FIG. 1

**62**

FIG. 2

(A)

(B)

FIG. 3

**621**

FIG. 4

**622**

FIG. 5

**5**

FIG. 6

FIG. 7

FIG. 8

## INTERNATIONAL SEARCH REPORT

| International application No. |
|---|
| **PCT/CN2024/074243** |

**A. CLASSIFICATION OF SUBJECT MATTER**

H01M 4/137(2010.01)i

According to International Patent Classification (IPC) or to both national classification and IPC

**B. FIELDS SEARCHED**

Minimum documentation searched (classification system followed by classification symbols)

IPC/CPC: H01M 4/-

Documentation searched other than minimum documentation to the extent that such documents are included in the fields searched

Electronic data base consulted during the international search (name of data base and, where practicable, search terms used)

CNTXT, 中国期刊网全文数据库, CJFD, WPABS, DWPI, ENTXT, ENTXTC: 正极, 极片, 集流体, 膜, 区域, 粒径分布, 活性材料, 距离, 厚度, 粘结剂, 电池, battery, positive, pole piece, current collector, film layer, surface, region, thickness

**C. DOCUMENTS CONSIDERED TO BE RELEVANT**

| Category* | Citation of document, with indication, where appropriate, of the relevant passages | Relevant to claim No. |
|---|---|---|
| A | CN 116435448 A (CONTEMPORARY AMPEREX TECHNOLOGY CO., LTD.) 14 July 2023 (2023-07-14)<br>entire description | 1-15 |
| A | JP 2014143063 A (TOYOTA MOTOR CORP.) 07 August 2014 (2014-08-07)<br>entire description | 1-15 |
| A | CN 111312988 A (SANYO ELECTRIC CO., LTD.) 19 June 2020 (2020-06-19)<br>entire description | 1-15 |
| A | CN 113875047 A (CONTEMPORARY AMPEREX TECHNOLOGY CO., LTD.) 31 December 2021 (2021-12-31)<br>entire description | 1-15 |
| A | CN 114497566 A (ZHUHAI COSMX BATTERY CO., LTD.) 13 May 2022 (2022-05-13)<br>entire description | 1-15 |
| A | CN 115398667 A (NINGDE AMPEREX TECHNOLOGY LTD.) 25 November 2022 (2022-11-25)<br>entire description | 1-15 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 April 2024** | **10 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/074243** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2023045369 A1 (CONTEMPORARY AMPEREX TECHNOLOGY CO., LTD.) 30 March 2023 (2023-03-30) <br> entire description | 1-15 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 116435448 | A | 14 July 2023 | None | | | |
| JP | 2014143063 | A | 07 August 2014 | JP | 5924541 | B2 | 25 May 2016 |
| CN | 111312988 | A | 19 June 2020 | JP | 2020095842 | A | 18 June 2020 |
| | | | | JP | 7082938 | B2 | 09 June 2022 |
| | | | | US | 2020194781 | A1 | 18 June 2020 |
| CN | 113875047 | A | 31 December 2021 | None | | | |
| CN | 114497566 | A | 13 May 2022 | None | | | |
| CN | 115398667 | A | 25 November 2022 | None | | | |
| WO | 2023045369 | A1 | 30 March 2023 | None | | | |

Form PCT/ISA/210 (patent family annex) (July 2022)

**REFERENCES CITED IN THE DESCRIPTION**

**Patent documents cited in the description**

- CN 202310875559